# FASCICULE DE BREVET EUROPEEN

(11) **EP 4 441 351 B1**
(45) Date de publication et mention de la délivrance du brevet: **19.03.2025**
(21) Numéro de dépôt: 22826065.9
(22) Date de dépôt: 30.11.2022
(51) Int. Cl.: F02C 3/06, F02K 3/06, F02K 3/077, F02C 7/14, F02C 7/18, F28D 7/00, F28D 7/08, F28F 7/02, F28F 13/08, F28D 21/00

(54) **ÉCHANGEUR DE CHALEUR AIR-HUILE AVEC BY-PASS POUR TURBOMACHINE**
LUFT-ÖL-WÄRMETAUSCHER MIT EINEM BYPASS FÜR EINE TURBOMASCHINE
AIR-OIL HEAT EXCHANGER COMPRISING A BYPASS FOR A TURBOMACHINE

(30) Priorité: 30.11.2021 EP 21211461; 14.12.2021 BE 202105982
(43) Date de publication de la demande: 09.10.2024
(73) Titulaire: Safran Aero Boosters SA, 4041 Herstal (BE)
(72) Inventeur: WEICKER, David, 1640 Rhode-Saint-Genèse (BE); CLEYET, Florian, 1640 Rhode-Saint-Genèse (BE); SERVAIS, Bruno, 4041 Herstal (BE)
(74) Mandataire: Ipsilon Benelux
(86) Numéro de dépôt international: PCT/EP2022/083810
(87) Numéro de publication internationale: WO 2023/099544

(56) Documents cités:
- EP-A2- 3 892 949
- US-A1- 2021 108 597
- US-B2- 10 502 502
- US-B2- 10 907 500

## Description

### Domaine

L'invention se rapporte au domaine des échangeurs de chaleur de turbomachine. Plus précisément, l'invention propose un échangeur de chaleur air/huile de turbomachine axiale.

### Art antérieur

Dans une turbomachine (turboréacteur), il est généralement nécessaire de refroidir l'huile du circuit de lubrification. A cet effet, il est connu de disposer un ou plusieurs échangeur(s) de chaleur dans le flux secondaire, c'est-à-dire en aval de la soufflante.

Cependant, la disposition d'un échangeur de chaleur au niveau du circuit secondaire pénalise la performance et le rendement global de la turbomachine. En effet, l'effort de poussée généré par la soufflante est en partie freiné par l'échangeur encombrant. De plus, des perturbations aérodynamiques du flux secondaire peuvent avoir lieu en-trainant des vibrations et des nuisances sonores.

Le document de brevet publié EP 3 674 531 A1 divulgue un échangeur de chaleur de type air-huile disposé dans la veine du flux secondaire d'une turbomachine. Un tel échangeur de chaleur génère des perturbations importantes au flux secondaire ayant une vitesse trop élevée pour que les pertes aérodynamiques ou de poussée soient négligeables.

Le document de brevet publié US 2021/0108597 A1 divulgue une turbomachine comprenant un échangeur de chaleur positionné dans un conduit de soufflante.

L'état de l'art présente donc des inconvénients relatifs à des pénalités de performances. Auxquelles s'ajoute la contrainte liée à la fragilité de l'échangeur. En effet, celui-ci ne peut pas être placé dans une veine de flux tertiaire comprise radialement entre le flux primaire et le flux secondaire. Cependant, le risque de passage de débris et corps étrangers dans la veine de flux tertiaire est élevé, ce qui peut endommager l'échangeur de chaleur de chaleur.

### Résumé de l'invention

### Problème technique

L'invention a pour objectif de proposer un échangeur de chaleur qui minimise les pertes aérodynamiques induites par la présence de l'échangeur dans la veine du flux d'air. Aussi, l'invention vise également à améliorer l'échange thermique afin de garantir un refroidissement efficace dans un encombrement restreint sans entraver le rendement de la turbomachine.

### Solution technique

L'invention a trait à un échangeur de chaleur pour une veine d'air annulaire d'une turbomachine axiale, comprenant une zone d'échange thermique avec des passages d'huile et des surfaces d'échange thermique formant un passage d'échange thermique pour l'air, ladite zone d'échange thermique étant radialement délimitée par une paroi supérieure et par une paroi inférieure, les passages d'huile s'étendant radialement et axialement entre lesdites paroi supérieure et paroi inférieure, ladite zone d'échange thermique présentant un profil en regard avec le flux d'air et compris dans un plan perpendiculaire audit flux d'air, ledit profil de la zone d'échange thermique étant en arc de cercle de manière à pouvoir être disposée dans la veine annulaire d'air, remarquable en ce que l'échangeur de chaleur comprend, en outre, une paroi de profil en arc de cercle parallèle à, et radialement à distance de la zone d'échange thermique de manière à former, entre ladite paroi et ladite zone d'échange thermique, un passage de by-pass pour l'air, parallèle au passage d'échange thermique.

Selon un mode avantageux de l'invention, le passage de by-pass, en dehors de limites radiales et/ou latérales dudit passage de by-pass, est libre de matière.

Selon un mode avantageux de l'invention, les limites radiales du passage de by-pass présentent un profil en arc de cercle et les limites latérales sont perpendiculaires auxdites limites radiales.

Selon un mode avantageux de l'invention, le passage de by-pass s'étend radialement sur une hauteur comprise entre 10% et 20% d'une hauteur radiale cumulée dudit passage de by-pass et de la zone d'échange thermique.

Selon un mode avantageux de l'invention, le passage de by-pass s'étend longitudinalement sur une étendue totale de l'échangeur de chaleur.

Selon un mode avantageux de l'invention, la paroi comprend à au moins une extrémité amont ou aval une bride de fixation de manière à pouvoir se fixer à un carter amont ou aval de la veine d'air annulaire.

Selon un mode avantageux de l'invention, la paroi est une paroi intérieure radialement à l'intérieur de la zone d'échange thermique, de manière à former une paroi de guidage radialement interne de la veine d'air annulaire.

Selon un mode avantageux de l'invention, l'échangeur comprend, en outre, une paroi extérieure radialement et adjacente à la zone d'échange thermique.

Selon un mode avantageux de l'invention, la paroi extérieure comprend à au moins une extrémité amont ou aval une bride de fixation de manière à pouvoir se fixer à un carter amont ou aval de la veine d'air annulaire.

Selon un mode avantageux de l'invention, la paroi est située radialement à l'extérieur de la zone d'échange thermique, de manière à former une paroi de guidage radialement externe de la veine d'air annulaire.

Selon un mode avantageux de l'invention, l'échangeur comprend, en outre, une paroi intérieure radialement et adjacente à la zone d'échange thermique.

Selon un mode avantageux de l'invention, la paroi intérieure comprend à au moins une extrémité amont ou aval ou circonférentielle, une bride de fixation de manière à pouvoir se fixer à un carter amont ou aval de la veine d'air annulaire.

Selon un mode avantageux de l'invention, la zone d'échange thermique présente une section longitudinale divergente suivant l'écoulement de l'air.

Selon un mode avantageux de l'invention, la zone d'échange thermique présente une section transversale au flux d'air, ladite section transversale augmente le long dudit flux d'air.

Selon un mode avantageux de l'invention, le passage de by-pass pour l'air présente une hauteur radiale constante sur l'étendue totale de l'échangeur de chaleur suivant le flux d'air.

Selon un mode avantageux de l'invention, l'échangeur comprend plusieurs secteurs angulaires, chaque secteur angulaire comprenant une arrivée d'huile et une sortie d'huile, ladite arrivée d'huile et/ou ladite sortie d'huile est intégralement formée dans la paroi intérieure, et au moins un des secteurs comprend un passage de mise en court-circuit dudit secteur, s'étendant de manière fluidique entre l'arrivée d'huile et la sortie d'huile le long de la paroi intérieure.

### Avantages de l'invention

L'invention est particulièrement avantageuse en ce qu'elle permet de garantir un échange thermique efficace dans un encombrement réduit tout en évitant d'entraver le rendement du moteur ce qui se traduit par une efficacité énergétique et une poussée optimisée qui permet avantageusement de réduire les émissions des gaz carboniques.

De plus, le positionnement de l'échangeur dans la veine de flux tertiaire comprenant un passage de by-pass pour l'air permet de garantir une fiabilité du fonctionnement de l'échangeur dans la turbomachine.

### Description des dessins

[Fig.1] est une vue partielle en perspective de l'échangeur selon un premier mode de réalisation ;
[Fig.2] illustre une vue en coupe de l'échangeur selon un deuxième mode de réalisation ;
[Fig.3] représente des trajets d'huile dans l'échangeur selon un troisième mode de réalisation ;
[Fig.3a] illustre une vue d'en-dessous en perspective des trajets d'huile selon le troisième mode de réalisation ;
[Fig.4] représente un trajet d'huile dans l'échangeur selon un quatrième mode de réalisation ;
[Fig.5] illustre une vue en coupe de l'échangeur disposé dans la veine d'air annulaire et selon le deuxième mode de réalisation ;
[Fig.6] représente une portion agrandie « A » de la zone d'échange thermique de la [Fig.2].

### Description détaillée

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement d'un flux dans la turbomachine.

Les figures montrent les éléments de manière schématique et ne sont pas représentées à l'échelle. En particulier, certaines dimensions sont agrandies pour faciliter la lecture des figures.

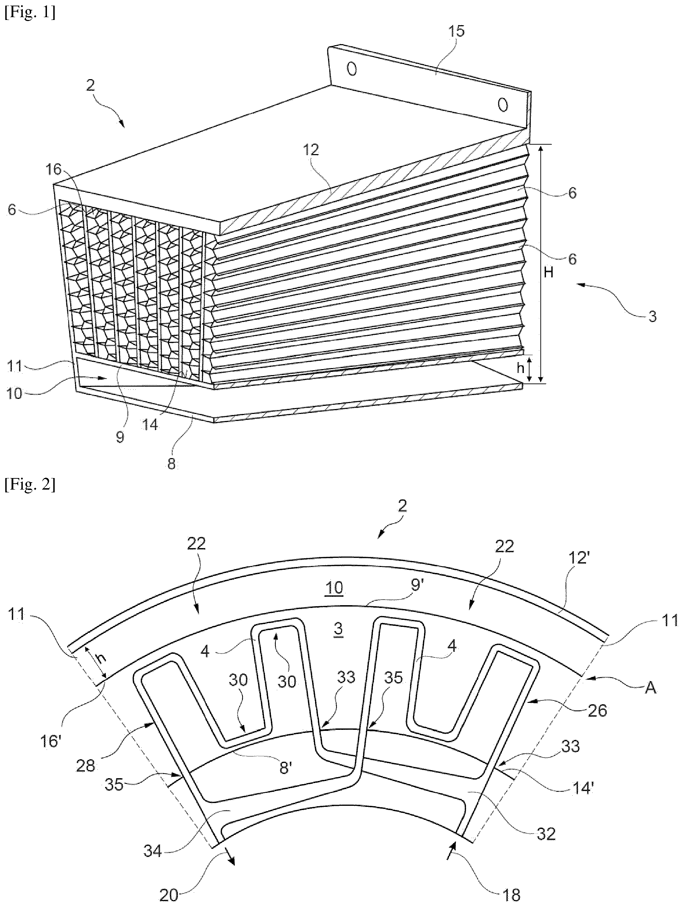

La [Fig.1] illustre vue partielle en perspective d'un échangeur de chaleur 2 selon un premier mode de réalisation. Il est à noter qu'une vue en perspective de l'échangeur de chaleur 2 est censée avoir un profil en arc de cercle, cependant la [Fig.1] a été fortement simplifiée afin de faciliter la compréhension.

L'échangeur de chaleur 2 est du type air/huile, configuré pour être monté dans une veine d'air annulaire d'une turbomachine axiale. De préférence, la turbomachine axiale est une turbomachine à trois flux, et la veine d'air annulaire est de préférence une veine annulaire de flux tertiaire.

En référence à la [Fig.1], l'échangeur 2 comprend une zone d'échange thermique 3 ayant des passages d'huile 4 et des surfaces d'échange thermique 6 formant un passage d'échange thermique pour le flux d'air F.

Préférentiellement, l'échangeur 2 est une pièce monobloc obtenue par fabrication additive, et plus préférentiellement obtenu par fusion laser sur un lit de poudre en aluminium. À cet effet, les passages d'huile 4 sont formés par des canaux tubulaires permettant la circulation d'huile et les surfaces d'échanges 6 sont préférentiellement formées par des parois ou plaques de faible épaisseur, et avantageusement, chaque plaque délimite deux surfaces d'échange 6.

La zone d'échange thermique 3 est radialement délimitée par une paroi supérieure 12 et par une paroi inférieure 9, les passages d'huile s'étendent radialement et axialement entre lesdites paroi supérieure 12 et paroi inférieure 9.

En effet, l'échangeur de chaleur 2 de la présente invention est de type « ACOC », acronyme de l'expression anglaise « Air-Cooled Oil Cooler », ce dernier est différent d'un échangeur air-huile surfacique « SACOC », dans lequel l'huile reste dans les parois inférieure et supérieure et ne traverse pas radialement l'échangeur.

Avantageusement, la zone d'échange thermique 3 présente un profil en regard avec le flux d'air et compris dans un plan perpendiculaire audit flux d'air, ledit profil de la zone d'échange thermique 3 étant en arc de cercle permettant à l'échangeur 2 de pouvoir être disposé dans la veine annulaire d'air, notamment grâce à une paroi 8 de l'échangeur 2, dite paroi intérieure 8 et qui est située radialement à l'intérieur de la zone d'échange thermique 3, de manière à former une paroi de guidage radialement interne 8 de la veine d'air annulaire.

La paroi intérieure 8 permet de former un passage de by-pass pour l'air 10 qui est parallèle au passage d'échange thermique entre la paroi intérieure 8 et la zone d'échange thermique 3.

Dans cette configuration, l'échangeur 2 comprend une paroi extérieure 12 radialement et adjacente à la zone d'échange thermique 3, ladite paroi extérieure 12 comprend à au moins une extrémité amont ou aval une bride de fixation 15 de manière à pouvoir se fixer à un carter amont ou aval de la veine d'air annulaire, le carter est de préférence un carter externe au flux d'air F ayant les parties amont et aval fixées à l'échangeur 2.

Le passage de by-pass pour l'air 10 est délimité radialement par deux limites radiales présentant un profil en arc de cercle et constituées de la paroi intérieure 8 et une paroi radiale 9, cette dernière est la délimitation radiale inférieure de la zone d'échange thermique 3.

Le passage de by-pass pour l'air 10 est libre de matière entre ses deux limites radiales 8, 9 et/ou ses deux limites latérales 11 dont une n'est pas illustrée dans la [Fig.1] due à la coupe réalisée. Les deux limites latérales 11 sont principalement perpendiculaires aux limites radiales 8, 9, formant ainsi le passage de by-pass pour l'air 10 présentant une section transversale au flux d'air F et qui est rectangulaire incurvée suivant le profil en arc de cercle.

Le passage de by-pass pour l'air 10 est communément appelé by-pass d'air 10, et peut aussi être appelé bypass « FOD », acronyme de l'expression anglaise « Foreign Object Debris ». En effet, le by-pass d'air 10 s'étend longitudinalement sur une étendue totale de l'échangeur 2, son rôle principal est de permettre le passage de débris contenu dans le flux d'air F à travers la veine annulaire de la turbomachine. Les débris ou « FOD » peuvent par exemple être des oiseaux, la grêle, les grêlons ou tout autre objet pouvant obstruer ou endommager l'échangeur.

En parallèle du by-pass d'air 10, une grille de protection peut être mise sur une face avant de l'échangeur 2 pour protéger davantage les passages d'huile 4 et les surfaces d'échange 6, et cela sans entraver leur capacité d'échange thermique.

Le by-pass d'air 10 s'étend radialement sur une hauteur h comprise entre 10% et 20% d'une hauteur radiale cumulée H dudit passage de by-pass et de la zone d'échange thermique. De préférence, la hauteur du by-pass d'air 10 s'étend radialement à au maximum 15% de la hauteur radiale cumulée H.

La hauteur radiale h du by-pass d'air 10 est constante sur l'étendue totale de l'échangeur 2 suivant le flux d'air F. En effet, la hauteur h n'évolue nullement suivant l'écoulement de l'air car il n'est pas souhaité de modifier la vitesse de celui-ci, uniquement le passage des débris est attendu du by-pass d'air 10. Cependant, la hauteur h peut présenter une petite variation d'au maximum 1% de la valeur h, qui peut être relative à la précision de fabrication.

Avantageusement, la constance de la hauteur h permet de limiter la différence de pertes de charge entre le by-pass d'air 10 et la zone d'échange thermique 3. Cependant, la hauteur radiale h du by-pass d'air 10 peut légèrement varier afin de compenser des éventuelles pertes de charges qui peuvent être causées par des perturbations aérodynamiques en aval de l'échangeur 2. À cet égard, le by-pass d'air 10 peut présenter une section longitudinale convergente et/ou divergente.

Selon le premier mode de réalisation illustré dans la [Fig.1], la zone d'échange thermique 3 est radialement délimitée par une face radialement interne 14 appartenant à la paroi radiale 9, et une face radialement externe 16 appartenant à la paroi extérieure 12.

Préférablement, l'échangeur 2 comprend une arrivée d'huile et une sortie d'huile sur la face radialement interne 14.

Les passages d'huile 4 comprennent plusieurs trajets entre une arrivée d'huile et une sortie d'huile, lesdits trajets s'étendant radialement extérieurement à la face radialement interne 14, et qui sont répartis le long du profil en arc de cercle de la zone d'échange thermique 3.

La zone d'échange thermique 3 peut comprendre une divergence circonférentielle dans sa partie aval, i.e. la section circonférentielle de la zone d'échange thermique 3 augmente d'amont en aval, permettant aux passages d'huiles 4 d'être répartis circonférentiellement dans l'échangeur 2 entre l'arrivée d'huile et la sortie d'huile tout en évitant de traverser le by-pass d'air.

La [Fig.2] illustre une vue en coupe de l'échangeur 2 selon un deuxième mode de réalisation, illustrant de manière schématique les trajets d'huile.

En effet, le deuxième mode de réalisation consiste à positionner le by-pass d'air 10 dans une position radialement haute de façon à ce que ledit by-pass d'air 10 soit adjacent au carter externe de la turbomachine. Alors que le premier mode de réalisation consiste à positionner le by-pass d'air 10, ayant la même configuration géométrique que ce qui est décrit précédemment, comme étant adjacent à un carter interne de la turbomachine.

À cet égard, et en référence à la [Fig.2], l'échangeur 2 comprend une paroi extérieure 12' située radialement à l'extérieur de la zone d'échange thermique 3, de manière à former une paroi de guidage radialement externe de la veine d'air annulaire.

Similairement à la paroi extérieure 12 de la [Fig.1], la paroi extérieure 12' de la [Fig.2] peut également comprendre une bride de fixation pour fixer l'échangeur à un carter externe de la turbomachine.

Dans cette configuration, le by-pass d'air 10 est délimité radialement par deux limites radiales constituées de la paroi extérieure 12' et d'une paroi radiale 9' délimitant radialement extérieurement la zone d'échange thermique 3. À cet effet, la hauteur radiale h du by-pass d'air 10 est comprise entre la paroi radiale 9' et la paroi extérieure 12.

L'échangeur 2 comprend, en outre, une paroi intérieure 8', disposée radialement intérieurement et adjacente à la zone d'échange thermique 3. À cet effet, la paroi intérieure 8' comprend à au moins une extrémité amont ou aval ou circonférentielle, une bride de fixation de manière à pouvoir se fixer à un carter amont ou aval de la veine d'air annulaire, ledit carter est de préférence un carter interne au flux d'air ayant les parties amont et aval fixées à l'échangeur 2.

Dans cette configuration, l'échangeur 2 est configuré pour faire intégralement partie des carters interne et externe de la turbomachine et d'assurer une continuité aérodynamique de la veine d'air annulaire.

Avantageusement, l'échangeur 2 peut être fabriqué et adapté selon l'architecture de la turbomachine dans laquelle il sera monté afin d'anticiper la partie radiale de la veine d'air annulaire qui comprend le plus de risques d'impact avec les débris « FOD » pour que le by-pass d'air 10 y soit agencé.

La [Fig.2] illustre également la zone d'échange thermique 3 comme étant radialement délimitée par une face radialement interne 14' appartenant à la paroi intérieure 8', et une face radialement externe 16' appartenant à la paroi radiale 9'.

Préférablement, l'échangeur 2 comprend une arrivée d'huile 18 et une sortie d'huile 20 sur la face radialement interne 14'. Cependant, l'échangeur 2 peut comprendre l'arrivée et la sortie d'huile 18, 20 sur la face radialement externe 16'.

Les passages d'huile 4 comprennent plusieurs trajets 22 entre l'arrivée d'huile 18 et la sortie d'huile 20 et qui sont répartis le long du profil en arc de cercle de la zone d'échange thermique 3. L'échangeur 2 peut comprendre un seul trajet d'huile comme il peut comprendre plusieurs trajets allant jusqu'à 10 trajets d'huile.

Chacun des trajets 22 comprend au moins une portion aller 26 et au moins une portion retour 28, les termes « aller » et « retour » correspondent au sens d'écoulement radial principal de l'huile dans les passages d'huile 4. À cet égard, la portion aller 26 correspond à une portion du trajet d'huile 22 dans laquelle l'huile s'écoule radialement du bas vers le haut. Similairement, la portion retour 28 correspond à une portion du trajet d'huile 22 dans laquelle l'huile s'écoule radialement du haut vers le bas.

Les deux portions aller 26 et retour 28 sont décalées le long du profil en arc de cercle de la zone d'échange thermique 3, et s'étendent radialement entre la face radialement interne 14' et la face radialement externe 16' de la zone d'échange thermique. De plus, chacun des trajets 22 comprend au moins une portion de connexion 30 reliant l'au moins une portion aller 26 à l'au moins une portion retour 28.

Avantageusement, comme on peut le voir sur la [Fig.2], le décalage circonférentiel le long du profil en arc de cercle de la zone d'échange thermique 3 assuré par la portion de connexion 30 entre la portion aller 26 et la portion retour 28 permet d'augmenter circonférentiellement le parcours de l'huile dans l'échangeur. A cet effet, le flux d'air est perpendiculaire au parcours de l'huile, et l'échange thermique est maximisé.

La face radialement interne 14' comprend en outre un distributeur 32 disposé de manière fluidique entre l'arrivée d'huile 18 et les trajets 22 et s'étendant le long du profil en arc de cercle, et un collecteur 34 disposé de manière fluidique entre les trajets 22 et la sortie d'huile 20 et s'étendant le long du profil en arc de cercle.

L'arrivée d'huile 18 est à une extrémité du distributeur 32 suivant le profil en arc de cercle et présentant une section de passage transversale audit profil en arc de cercle qui diminue progressivement le long de ce dernier depuis l'arrivée d'huile 18 jusqu'à une extrémité opposée du distributeur 32.

Similairement, la sortie d'huile 20 est à une extrémité du collecteur 34 suivant le profil en arc de cercle et présentant une section de passage transversale audit profil en arc de cercle qui diminue progressivement le long de ce dernier depuis la sortie d'huile 20 jusqu'à une extrémité opposée du collecteur 34.

Préférentiellement, le distributeur 32 et le collecteur 34 sont côte-à-côte suivant une étendue axiale de la face radialement interne 14' de la zone d'échange thermique 3.

La présente invention présente deux variantes différentes concernant les trajets d'huile. Les troisième et quatrième modes de réalisation qui vont être décrits concernent des variantes du trajet d'huile, étant entendu que chacun de ces troisième et quatrième modes de réalisation peut s'appliquer soit au premier mode ou au deuxième mode. En effet, on peut choisir une position radiale haute ou basse du by-pass d'air et parallèlement définir le mode de réalisation du trajet d'huile souhaité.

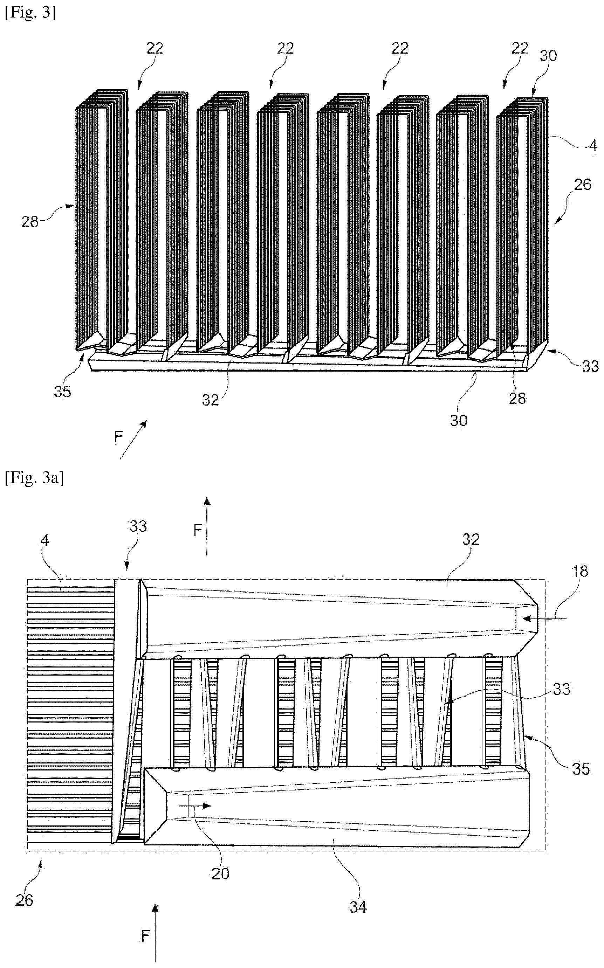

La [Fig.3] illustre les trajets d'huile 22 tel que décrits précédemment, dans l'échangeur selon le troisième mode de réalisation, et dans lequel, chacune des portions aller 26, retour 28 et de connexion 30 de chacun des trajets 22 s'étendent sur une longueur totale axiale de la zone d'échange thermique.

Chaque trajet 22 comprend plusieurs passages d'huile 4 parallèles répartis sur la longueur totale axiale de la zone d'échange thermique. Plus précisément, les passages d'huile 4 s'étendent axialement sur la majorité de la longueur axiale des surfaces d'échanges thermiques. De préférence, le nombre de passages d'huile 4 est compris entre 5 et 30 passages d'huile 4, et plus préférentiellement, entre 10 et 25 passages d'huile 4.

La [Fig.3a] illustre une vue d'en-dessous en perspective des trajets d'huile de la [Fig.3] qui sont selon le troisième mode de réalisation de l'invention.

À cet effet, le distributeur 32 permet d'alimenter les passages d'huile 4 qui sont compris dans les portions aller 26, et la liaison entre le distributeur 32 et lesdites portions aller 26 est réalisé au moyen d'un passage d'entrée d'huile 33.

Préférentiellement, chaque passage d'entrée d'huile 33 fait partie intégrante des passages d'huile 4, et comprend une section de passage transversale au flux d'air F et qui diminue progressivement le long de ce dernier.

Avantageusement, la diminution de la section transversale du passage d'entrée d'huile 33 permet de réduire les pertes de charge.

Similairement, le collecteur 34 permet de récupérer l'huile sortant des passages d'huile 4 qui sont compris dans les portions retour 28 au moyen d'un passage de sortie d'huile 35.

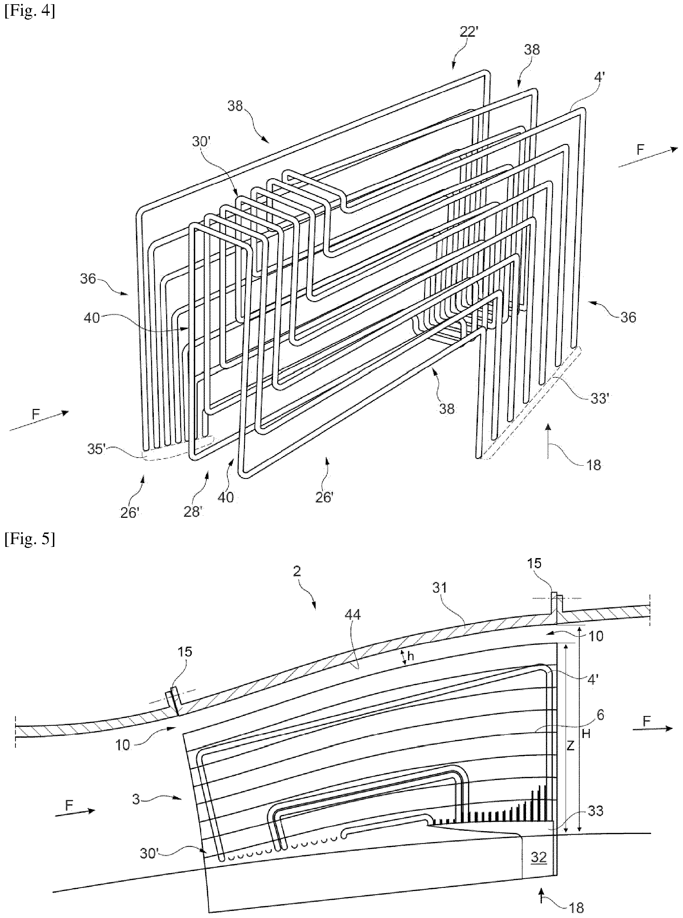

La [Fig.4] représente un trajet d'huile 22' dans l'échangeur selon un quatrième mode de réalisation. De préférence, l'échangeur comprend une pluralité de trajets d'huile similaires au trajet d'huile 22'.

Le trajet d'huile 22' comprend plusieurs passages d'huile 4' qui sont formés par des canaux tubulaires parallèles et formant une portion aller 26' et une portion retour 28'. Chacune des portions aller 26' et retour 28' forme un profil d'écoulement de l'huile qui est doublement coudé avec une première partie radiale 36, une deuxième partie axiale 38 et une troisième partie radiale 40.

L'échangeur selon le quatrième mode de réalisation peut comprendre une pluralité de trajets d'huile 22'. À cet égard, chaque trajet d'huile 22' peut être directement lié au distributeur 32' et au collecteur 34' ainsi qu'au passages d'entrée d'huile 33' et aux passages de sorties d'huile 35' qui sont identiques à ceux décrits précédemment pour le troisième mode de réalisation.

Dans le sens de l'écoulement de l'huile, i.e. du passage d'entrée d'huile 33 au passage de sortie d'huile 35, les parties aller 26' et les parties retour 28' sont reliées entre elles via une portion de connexion 30'. Précisément, ladite portion de connexion 30' permet de relier deux troisièmes parties radiales 40 chacune étant appartenant à la partie aller 26' et l'autre à la partie retour 28'.

Similairement et dans le même sens d'écoulement de l'huile, les parties retour 28' sont reliées aux parties aller 26' au moyen de la portion de connexion (non illustrée dans la [Fig.4]). Précisément, ladite portion de connexion permet de relier deux premières parties radiales 36 chacune étant appartenant à la partie retour 28' et l'autre à la partie aller 26'.

La [Fig.4] illustre une seule partie retour 28', cependant, chaque trajet d'huile 22' peut comprendre plusieurs parties retour 28' et plusieurs parties aller 26'. Préférentiellement, le trajet d'huile 22' comprend deux parties aller 26' et deux parties retour 28'.

Les deuxièmes parties axiales des portions aller 26' et retour 28' présentent des directions d'écoulement opposées. À cet effet, la deuxième partie axiale 38 de la portion retour 28' comprend l'huile qui est dans une première direction d'écoulement axiale opposée à la deuxième partie axiale 38 de la portion aller 26', la direction d'écoulement de cette dernière est particulièrement opposée au flux d'air F.

Dans cette configuration, l'échange thermique entre les passages d'huile 4' et l'air est en partie réalisé en contre-courant. Avantageusement, cela permet un échange thermique par convection plus efficace entre les passages d'huile 4' et le flux d'air F, cela permet concrètement de minimiser la longueur du parcours de l'huile dans les passages d'huile 4' de l'échangeur, ce qui permet de réduire l'encombrement et le poids de l'échangeur dans la turbomachine.

Préférentiellement, le quatrième mode de réalisation de l'invention est utilisé dans le cas où l'étendue axiale totale de la zone d'échange thermique est supérieure à l'étendue radiale totale de cette dernière. Avantageusement, cela permet de maximiser l'échange thermique en contre-courant avec le flux d'air.

L'échangeur de l'invention présente une zone d'échange thermique étant préférentiellement divergente dans la direction radiale et suivant le sens de l'écoulement de l'air.

Avantageusement, la divergence de la zone d'échange thermique permet de limiter les pertes de charges au sein de l'échangeur et d'améliorer l'échange thermique entre l'air et l'huile parcourant les passages d'huile 4'.

La [Fig.5] illustre une vue en coupe de l'échangeur 2 selon le deuxième mode de réalisation, l'échangeur 2 étant disposé dans la veine d'air annulaire.

Les passages d'huiles 4' illustrés dans la [Fig.5] appartiennent au quatrième mode de réalisation de l'invention. Cependant, la divergence de l'échangeur 2 ne se limite pas à ce dernier mode particulièrement, et les passages d'huiles 4 illustrés aux figures 3 et 3a représentant le troisième mode de réalisation peuvent également être utilisés dans la [Fig.5].

En référence à la [Fig.5], la hauteur totale radiale Z de la zone d'échange thermique 3 augmente d'amont en avant, et le passage d'air axial comprend des canaux d'air 5 délimités par les surfaces d'échange thermique 6 et présentant des sections de passage augmentant d'amont en aval en correspondance avec la hauteur totale radiale Z de la zone d'échange thermique 3.

La hauteur totale radiale Z de la zone d'échange thermique 3 et/ou les sections des canaux d'air 5 augmentent d'amont en aval sur au moins 70% d'une étendue totale axiale de ladite zone d'échange thermique 3. Préférentiellement, les sections des canaux d'air 5 augmentent d'amont en aval sur toute l'étendue totale axiale de la zone d'échange thermique 3.

L'augmentation de la hauteur totale radiale Z de la zone d'échange thermique 3 et/ou l'augmentation des sections des canaux d'air 5 est monotone et/ou d'au moins 30%. Préférentiellement, l'augmentation des sections des canaux d'air 5 est monotone et d'au moins 50%.

De préférence, l'échangeur 2 comprend plusieurs secteurs angulaires, chaque secteur angulaire comprenant l'arrivée d'huile 18 et la sortie d'huile, ladite arrivée d'huile et/ ou ladite sortie d'huile est intégralement formée dans la paroi intérieure, et au moins un des secteurs comprend un passage de mise en court-circuit (non-illustré) dudit secteur, également appelé by-pass d'huile, s'étendant de manière fluidique entre l'arrivée d'huile 18 et la sortie d'huile le long de la paroi intérieure.

Avantageusement, le by-pass d'huile permet d'assurer le fonctionnement à froid de l'échangeur 2, notamment à des températures avoisinant les -40°C, en effet, l'huile froide présente une viscosité élevée qui ne convient pas pour permettre son passage dans l'échangeur 2, l'huile passe donc dans le by-pass d'huile jusqu'à ce qu'elle atteigne une viscosité convenable.

À cet égard, un autre circuit appelé circuit de décongélation (non-illustré) peut être agencé à proximité ou en contact du by-pass d'huile, et peut être également en contact avec les passages d'huile 4', le circuit de décongélation peut assurer le réchauffement de l'huile comprise dans l'échangeur 2.

Le by-pass d'huile comprend un clapet normalement fermé et apte à s'ouvrir en présence d'une différence de pression entre l'arrivée d'huile 18 et la sortie d'huile, supérieure ou égale à une valeur limite. Le clapet peut également s'ouvrir quand la viscosité de l'huile est trop élevée par rapport à un seuil préalablement identifié.

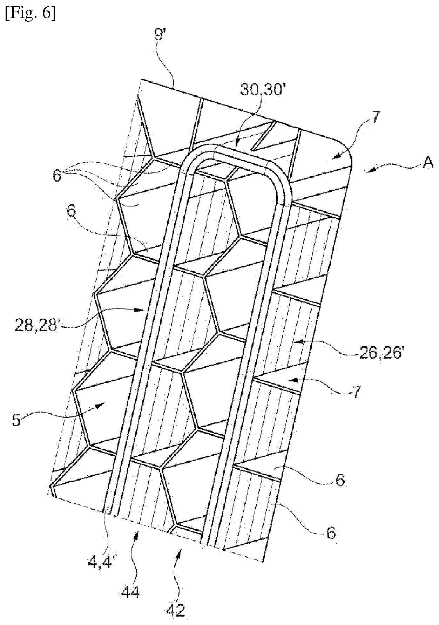

La [Fig.6] représente une portion agrandie A de la zone d'échange thermique identifiée dans la [Fig.2].

La portion agrandie A est légèrement en perspective pour faciliter sa description et montre les passages d'huiles 4 selon le troisième mode de réalisation de l'invention ou les passages d'huiles 4' selon le quatrième mode de réalisation.

Les canaux d'air 5 sont délimités par les surfaces d'échange 6 et la portion aller 26, 26' ou la portion retour 28, 28'. Les sections des canaux d'air 5 présentent une forme polygonale et préférentiellement pentagonale. Plus préférentiellement, chaque canal d'air 5 est délimité par quatre plaques présentant quatre surfaces d'échanges 6 et une portion aller 26, 26' ou une portion retour 28, 28' et deux surfaces d'échange 6 sur les quatre appartenant à des plaques transversales intégralement formées avec les passages d'huiles 4, 4' des portions aller 26, 26' ou des portions retour 28, 28'.

À cet effet, les passages d'huiles 4, 4' peuvent être formé par un évidement de matière dans une plaque ou un panneau, et les portions aller et retour peuvent être comprises dans un panneau radial.

Les canaux d'air 5 entre chaque paire de portions aller 26, 26' et portions retour 28, 28' voisines forment au moins deux rangées radiales 42, 44 de polygones, préférentiellement de pentagone, imbriqués. Le nombre de rangées radiales 42, 44 peut dépendre de la distance circonférentielle entre la portion aller 26, 26' et la portion retour 28, 28'.

La zone d'échange thermique comprend en outre, des plaques de bord 7 présentant les surfaces d'échange 6, en effet, les plaques de bords 7 sont similaires aux plaques présentant les surfaces d'échange 6 de la zone d'échange thermique.

Avantageusement, les plaques de bord 7 permettent de garantir un échange thermique aux bords de la zone d'échange thermique tout en générant une perte de charge constante par rapport au reste de ladite zone d'échange thermique, cela permet de minimiser les perturbations aérodynamiques du flux d'air dans la veine annulaire.

L'échangeur de l'invention et selon quelconque des modes de réalisation précédemment décrits, peut s'étendre de manière continue sur 360° dans un tronçon de la veine d'air annulaire autour de l'axe longitudinal de la turbomachine. Préférentiellement, l'échangeur s'étend de manière discontinue sur 360° autour de l'axe longitudinal en se subdivisant en plusieurs segments angulaires et chaque échangeur peut assurer une fonction d'échange thermique entre l'air et l'huile qui peut être différente d'un segment à un autre.

En effet, chaque peut combiner le refroidissement de plusieurs fonctions ou circuits d'huile de la turbomachine, et cela en fonction de différents paramètres liées au besoin de refroidissement de l'huile, i.e. températures d'entrée, débits, température de sortie demandée ou les conditions de l'air, les différents circuits peuvent être mis en contact thermique ou bien isolés.

À cet égard, l'échangeur peut assurer le refroidissement de l'huile utilisée dans plusieurs composant de l'aéronef, notamment, un moteur, une boîte de vitesse, une génératrice moteur et tout composant électronique nécessitant un refroidissement.

Avantageusement, l'échangeur et en particulier les passages d'huile peuvent supporter une température basse de l'huile pouvant atteindre -54°C, et parallèlement supporter une haute température d'huile allant jusqu'à 180°C avec un débit atteignant les 30000 1/h.

Il est à noter que l'invention ne se limite pas aux seuls exemples décrits sur les figures. Les enseignements de la présente invention peuvent notamment être applicables à un autre type de turbomachine.

Chaque caractéristique technique de chaque exemple illustré est applicable aux autres exemples. Notamment, la combinaison du troisième ou quatrième mode de réalisation avec le premier ou le deuxième mode de réalisation.

## Revendications

1. Échangeur de chaleur (2) pour une veine d'air annulaire d'une turbomachine axiale, comprenant une zone d'échange thermique (3) avec des passages d'huile (4) et des surfaces d'échange thermique (6) formant un passage d'échange thermique pour l'air, ladite zone d'échange thermique (3) étant radialement délimitée par une paroi supérieure (12, 9') et par une paroi inférieure (9, 8'), les passages d'huile (4) s'étendant radialement et axialement entre lesdites paroi supérieure (12, 9') et paroi inférieure (9, 8'), ladite zone d'échange thermique (3) présentant un profil en regard avec le flux d'air (F) et compris dans un plan perpendiculaire audit flux d'air (F), ledit profil de la zone d'échange thermique (3) étant en arc de cercle de manière à pouvoir être disposée dans la veine annulaire d'air,
**caractérisé en ce que** l'échangeur de chaleur (2) comprend, en outre, une paroi (8, 12') de profil en arc de cercle parallèle à, et radialement à distance de la zone d'échange thermique (3) de manière à former, entre ladite paroi (8, 12') et ladite zone d'échange thermique (3), un passage de by-pass pour l'air (10), parallèle au passage d'échange thermique.

2. Échangeur de chaleur (2) selon la revendication 1, dans lequel le passage de by-pass (10), en dehors de limites radiales (8, 9, 9', 12') et/ou latérales (11) dudit passage de by-pass (10), est libre de matière.

3. Échangeur de chaleur (2) selon la revendication 2, dans lequel les limites radiales (8, 9, 9', 12') du passage de by-pass (10) présentent un profil en arc de cercle et les limites latérales (11) sont perpendiculaires auxdites limites radiales.

4. Échangeur de chaleur (2) selon l'une des revendications 1 à 3, dans lequel le passage de by-pass (10) s'étend radialement sur une hauteur (h) comprise entre 10% et 20% d'une hauteur radiale cumulée (H) dudit passage de by-pass (10) et de la zone d'échange thermique (3).

5. Échangeur de chaleur (2) selon l'une des revendications 1 à 4, dans lequel le passage de by-pass (10) s'étend longitudinalement sur une étendue totale de l'échangeur de chaleur (2).

6. Échangeur de chaleur (2) selon l'une des revendications 1 à 5, dans lequel la paroi (8, 12') comprend à au moins une extrémité amont ou aval une bride de fixation (15) de manière à pouvoir se fixer à un carter amont ou aval de la veine d'air annulaire.

7. Échangeur de chaleur (2) selon l'une des revendications 1 à 6, dans lequel la paroi (8) est une paroi intérieure radialement à l'intérieur de la zone d'échange thermique (3), de manière à former une paroi de guidage (8) radialement interne de la veine d'air annulaire, et préférentiellement ledit échangeur de chaleur (2) comprenant, en outre, une paroi extérieure (12) radialement et adjacente à la zone d'échange thermique (3).

8. Échangeur de chaleur (2) selon la revendication 7, dans lequel la paroi extérieure (12) comprend à au moins une extrémité amont ou aval une bride de fixation (15) de manière à pouvoir se fixer à un carter amont ou aval de la veine d'air annulaire.

9. Échangeur de chaleur (2) selon l'une des revendications 1 à 6, dans lequel la paroi (12') est située radialement à l'extérieur de la zone d'échange thermique (3), de manière à former une paroi de guidage (12') radialement externe de la veine d'air annulaire.

10. Échangeur de chaleur (2) selon la revendication 9, comprenant, en outre, une paroi intérieure (8') radialement et adjacente à la zone d'échange thermique (3).

11. Échangeur de chaleur (2) selon la revendication 10, dans lequel la paroi intérieure (8') comprend à au moins une extrémité amont ou aval ou circonférentielle, une bride de fixation de manière à pouvoir se fixer à un carter amont ou aval de la veine d'air annulaire.

12. Échangeur de chaleur (2) selon l'une des revendications 1 à 11, dans lequel la zone d'échange thermique présente une section longitudinale divergente suivant un flux d'air (F).

13. Échangeur de chaleur (2) selon l'une des revendications 1 à 12, dans lequel la zone d'échange thermique présente une section transversale au flux d'air, ladite section transversale augmente le long dudit flux d'air.

14. Échangeur de chaleur (2) selon l'une des revendications 1 à 13, dans lequel le passage de by-pass (10) pour l'air présente une hauteur radiale (h) constante sur l'étendue totale de l'échangeur de chaleur suivant le flux d'air (F).

15. Échangeur de chaleur (2) selon l'une des revendications 1 à 14, dans lequel ledit échangeur de chaleur comprend plusieurs secteurs angulaires, chaque secteur angulaire comprenant une arrivée d'huile (18) et une sortie d'huile (20), ladite arrivée d'huile (18) et/ou ladite sortie d'huile (20) est intégralement formée dans la paroi intérieure (8, 8'), et au moins un des secteurs comprend un passage de mise en court-circuit dudit secteur, s'étendant de manière fluidique entre l'arrivée d'huile et la sortie d'huile le long de la paroi intérieure (8, 8').

## Patentansprüche

1. Wärmetauscher (2) für einen ringförmigen Luftstrom einer axialen Turbomaschine, umfassend einen Wärmeaustauschbereich (3) mit Ölkanälen (4) und Wärmeaustauschflächen (6), die einen Wärmeaustauschkanal für die Luft bilden, wobei der Wärmeaustauschbereich (3) radial durch eine obere Wand (12, 9') und eine untere Wand (9, 8') begrenzt ist, die Ölkanäle (4) sich radial und axial zwischen den genannten oberen Wand (12, 9') und unteren Wand (9, 8') erstrecken, der Wärmeaustauschbereich (3) ein Profil aufweist, das dem Luftstrom (F) zugewandt ist und in einer Ebene senkrecht zu diesem Luftstrom (F) liegt, wobei das Profil des Wärmeaustauschbereichs (3) bogenförmig ist, um in den ringförmigen Luftstrom eingebaut werden zu können, **dadurch gekennzeichnet, dass** der Wärmetauscher (2) ferner eine bogenförmige Wand (8, 12') umfasst, die parallel und radial in einem Abstand zum Wärmeaustauschbereich (3) angeordnet ist, um zwischen der genannten Wand (8, 12') und dem Wärmeaustauschbereich (3) einen Bypass-Kanal für die Luft (10) zu bilden, der parallel zum Wärmeaustauschkanal verläuft.

2. Wärmetauscher (2) nach Anspruch 1, wobei der Bypass-Kanal (10) außerhalb der radialen (8, 9, 9', 12') und/oder seitlichen (11) Begrenzungen des genannten Bypass-Kanals (10) frei von Material ist.

3. Wärmetauscher (2) nach Anspruch 2, wobei die radialen Begrenzungen (8, 9, 9', 12') des Bypass-Kanals (10) ein bogenförmiges Profil aufweisen und die seitlichen Begrenzungen (11) senkrecht zu den genannten radialen Begrenzungen sind.

4. Wärmetauscher (2) nach einem der Ansprüche 1 bis 3, wobei der Bypass-Kanal (10) sich radial über eine Höhe (h) erstreckt, die zwischen 10% und 20% einer kumulierten radialen Höhe (H) des genannten Bypass-Kanals (10) und des Wärmeaustauschbereichs (3) liegt.

5. Wärmetauscher (2) nach einem der Ansprüche 1 bis 4, wobei der Bypass-Kanal (10) sich longitudinal über die gesamte Länge des Wärmetauschers (2) erstreckt.

6. Wärmetauscher (2) nach einem der Ansprüche 1 bis 5, wobei die Wand (8, 12') an mindestens einem Ende stromaufwärts oder stromabwärts einen Befestigungsflansch (15) umfasst, um an einem stromaufwärts oder stromabwärts gelegenen Gehäuse des ringförmigen Luftstroms befestigt werden zu können.

7. Wärmetauscher (2) nach einem der Ansprüche 1 bis 6, wobei die Wand (8) eine innere Wand ist, die radial innerhalb des Wärmeaustauschbereichs (3) liegt, um eine radial innere Führungswand (8) des ringförmigen Luftstroms zu bilden, und vorzugsweise umfasst der Wärmetauscher (2) ferner eine äußere Wand (12), die radial und benachbart zum Wärmeaustauschbereich (3) liegt.

8. Wärmetauscher (2) nach Anspruch 7, wobei die äußere Wand (12) an mindestens einem Ende stromaufwärts oder stromabwärts einen Befestigungsflansch (15) umfasst, um an einem stromaufwärts oder stromabwärts gelegenen Gehäuse des ringförmigen Luftstroms befestigt werden zu können.

9. Wärmetauscher (2) nach einem der Ansprüche 1 bis 6, wobei die Wand (12') radial außerhalb des Wärmeaustauschbereichs (3) liegt, um eine radial äußere Führungswand (12') des ringförmigen Luftstroms zu bilden.

10. Wärmetauscher (2) nach Anspruch 9, ferner umfassend eine innere Wand (8'), die radial und benachbart zum Wärmeaustauschbereich (3) liegt.

11. Wärmetauscher (2) nach Anspruch 10, wobei die innere Wand (8') an mindestens einem Ende stromaufwärts oder stromabwärts oder zirkumferentiell einen Befestigungsflansch umfasst, um an einem stromaufwärts oder stromabwärts gelegenen Gehäuse des ringförmigen Luftstroms befestigt werden zu können.

12. Wärmetauscher (2) nach einem der Ansprüche 1 bis 11, wobei der Wärmeaustauschbereich eine divergente Längssektion entlang eines Luftstroms (F) aufweist.

13. Wärmetauscher (2) nach einem der Ansprüche 1 bis 12, wobei der Wärmeaustauschbereich eine Querschnittsfläche zum Luftstrom aufweist, wobei die genannte Querschnittsfläche entlang des genannten Luftstroms zunimmt.

14. Wärmetauscher (2) nach einem der Ansprüche 1 bis 13, wobei der Bypass-Kanal (10) für die Luft eine konstante radiale Höhe (h) über die gesamte Länge des Wärmetauschers entlang des Luftstroms (F) aufweist.

15. Wärmetauscher (2) nach einem der Ansprüche 1 bis 14, wobei der genannte Wärmetauscher mehrere Winkelsektoren umfasst, wobei jeder Winkelsektor einen Öleinlass (18) und einen Ölauslass (20) umfasst, wobei der genannte Öleinlass (18) und/oder der genannte Ölauslass (20) integral in der inneren Wand (8, 8') ausgebildet ist, und mindestens einer der Sektoren einen Kurzschlusskanal des genannten Sektors umfasst, der sich fluidisch zwischen dem Öleinlass und dem Ölauslass entlang der inneren Wand (8, 8') erstreckt.

## Claims

1. Heat exchanger (2) for an annular air vein of an axial turbomachine, comprising a heat exchange zone (3) with oil passages (4) and heat exchange surfaces (6) forming a heat exchange passage for the air, said heat exchange zone (3) being radially delimited by an upper wall (12, 9') and by a lower wall (9, 8'), the oil passages (4) extending radially and axially between said upper wall (12, 9') and lower wall (9, 8'), said heat exchange zone (3) having a profile facing the air flow (F) and included in a plane perpendicular to said air flow (F), said profile of the heat exchange zone (3) being in an arc shape so as to be able to be disposed in the annular air vein,
**characterized in that** the heat exchanger (2) further comprises a wall (8, 12') with an arc-shaped profile parallel to, and radially spaced from the heat exchange zone (3) so as to form, between said wall (8, 12') and said heat exchange zone (3), a bypass passage for the air (10), parallel to the heat exchange passage.

2. Heat exchanger (2) according to claim 1, wherein the bypass passage (10), outside the radial (8, 9, 9', 12') and/or lateral (11) limits of said bypass passage (10), is free of material.

3. Heat exchanger (2) according to claim 2, wherein the radial limits (8, 9, 9', 12') of the bypass passage (10) have an arc-shaped profile and the lateral limits (11) are perpendicular to said radial limits.

4. Heat exchanger (2) according to any one of claims 1 to 3, wherein the bypass passage (10) extends radially over a height (h) between 10% and 20% of a cumulative radial height (H) of said bypass passage (10) and the heat exchange zone (3).

5. Heat exchanger (2) according to any one of claims 1 to 4, wherein the bypass passage (10) extends longitudinally over the entire length of the heat exchanger (2).

6. Heat exchanger (2) according to any one of claims 1 to 5, wherein the wall (8, 12') comprises at least one upstream or downstream end a fixing flange (15) so as to be able to be fixed to an upstream or downstream casing of the annular air vein.

7. Heat exchanger (2) according to any one of claims 1 to 6, wherein the wall (8) is an inner wall radially inside the heat exchange zone (3), so as to form a radially internal guiding wall (8) of the annular air vein, and preferably said heat exchanger (2) further comprises an outer wall (12) radially adjacent to the heat exchange zone (3).

8. Heat exchanger (2) according to claim 7, wherein the outer wall (12) comprises at least one upstream or downstream end a fixing flange (15) so as to be able to be fixed to an upstream or downstream casing of the annular air vein.

9. Heat exchanger (2) according to any one of claims 1 to 6, wherein the wall (12') is located radially outside the heat exchange zone (3), so as to form a radially external guiding wall (12') of the annular air vein.

10. Heat exchanger (2) according to claim 9, further comprising an inner wall (8') radially adjacent to the heat exchange zone (3).

11. Heat exchanger (2) according to claim 10, wherein the inner wall (8') comprises at least one upstream or downstream or circumferential end, a fixing flange so as to be able to be fixed to an upstream or downstream casing of the annular air vein.

12. Heat exchanger (2) according to any one of claims 1 to 11, wherein the heat exchange zone has a divergent longitudinal section following an air flow (F).

13. Heat exchanger (2) according to any one of claims 1 to 12, wherein the heat exchange zone has a cross-section to the air flow, said cross-section increasing along said air flow.

14. Heat exchanger (2) according to any one of claims 1 to 13, wherein the bypass passage (10) for the air has a constant radial height (h) over the entire length of the heat exchanger following the air flow (F).

15. Heat exchanger (2) according to any one of claims 1 to 14, wherein said heat exchanger comprises several angular sectors, each angular sector comprising an oil inlet (18) and an oil outlet (20), said oil inlet (18) and/or said oil outlet (20) being integrally formed in the inner wall (8, 8'), and at least one of the sectors comprises a short-circuit passage of said sector, extending fluidically between the oil inlet and the oil outlet along the inner wall (8, 8').
